# EUROPÄISCHE PATENTANMELDUNG

(11) **EP 0 798 335 A2**
(43) Veröffentlichungstag der Anmeldung: **01.10.1997**
(21) Anmeldenummer: 97104831.9
(22) Anmeldetag: 21.03.1997
(51) Int. Cl.: C08J 9/28

(54) **Verfahren zur Herstellung von porösen hydrophilen, hochquellfähigen Hydrogelen**

(30) Priorität: 29.03.1996 DE 19612628
(71) Anmelder: HOECHST AKTIENGESELLSCHAFT, 65929 Frankfurt am Main (DE)
(72) Erfinder: Funk, Rüdiger, Dr., 65527 Niedernhausen (DE); Herfert, Norbert, Dr., 63674 Altenstadt (DE); Riegel, Ulrich, 60386 Frankfurt am Main (DE)

(57) **Zusammenfassung**

Die vorliegende Anmeldung betrifft ein Verfahren zur Herstellung poröser hydrophiler, hochquellfähiger Hydrogele, dadurch gekennzeichnet, daß mit Wasser gequollene hydrophile, hochquellfähige Hydrogele gefriergetrocknet sind.

## Beschreibung

Die vorliegende Erfindung betrifft ein Verfahren zur Herstellung von porösen hydrophilen, hochquellfähigen Hydrogelen durch Gefriertrocknung von gequollenen hydrophilen, hochquellfähigen Hydrogelen.

Hydrophile, hochquellfähige Hydrogele sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether, vernetzte Carboxymethylcellulose, teilweise vernetztes Polyalkylenoxid oder in wäßrigen Flüssigkeiten quellbare Naturprodukte, wie beispielsweise Guarderivate. Solche Hydrogele werden als wäßrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Von solchen flüssigkeitsabsorbierenden Hydrogelen wird neben einer hohen Flüssigkeitsaufnahmekapazität auch eine hohe Quellgeschwindigkeit gefordert. Bei zu hoher Quellgeschwindigkeit tritt jedoch vor allem an der Oberfläche der Harzteilchen der unerwünschte Effekt des "Gel-Blocking" auf, bei dem die an der Oberfläche zu stark aufgequollenen Harzteilchen eine Sperre für die weitere zu absorbierende Flüssigkeit bilden, und so eine weitere Absorption von Flüssigkeit nur mehr langsam bzw. gar nicht möglich ist. Die Quellgeschwindigkeit kann jedoch durch eine Erhöhung der spezifischen Oberfläche der Absorptionsharze erhöht werden, ohne daß der oben beschriebene unerwünschte Effekt des "Gel-Blocking" auftritt. Absorptionsharze mit poröser Struktur zeigen daher Vorteile gegenüber Absorptionsharzen mit nicht-poröser Struktur.

Folgerichtig hat es nicht an Versuchen gefehlt, poröse hydrophile, hochquellfähige Hydrogele bereitzustellen.

In der DE-A-38 31 261 wird die Herstellung eines porösen flüssigkeitsabsorbierenden, vernetzten Acrylpolymeren durch Polymerisation einer wäßrigen teilneutralisierten Lösung von Acryl- oder Methacrylsäure und eines vernetzend wirkenden Monomeren beschrieben. Die poröse Struktur des Acrylpolymeren wird hierbei durch Zusatz eines N-haltigen Treibmittels, das sich während der Trocknung des Acrylpolymeren bei 80 bis 250°C unter Gasbildung zersetzt oder sublimiert, erhalten.

Die US 5,354,290 beschreibt poröse polymere Strukturen bestehend aus einem wasserquellbaren, wasserunlöslichen Polymer-Material. Zur Herstellung dieser porösen polymeren Strukturen werden geeignete wasserlösliche Monomere zusammen mit einem wasserlöslichen Vernetzer in einer Öl-in-Wasser-Emulsion polymerisiert. Bei der Trocknung des so erhaltenen Polymers verdampft die flüchtige Ölphase und erzeugt Poren in dem Polymermaterial.

WO 94/22502 beschreibt einen superabsorbierenden Polymer-Schaum, der durch Polymerisation geeigneter Monomerer in Gegenwart eines Treibmittels, das bevorzugt eine Verdampfungstemperatur unterhalb von 50°C besitzt, hergestellt wird.

In der DE-A 36 37 057 ist ein Verfahren zur Herstellung eines porösen Polymeren mit wasserabsorbierenden Eigenschaften beschrieben. Die zur Herstellung dieser porösen Polymeren geeignete Monomere werden in der Wasserphase einer O/W/O-Emulsion polymerisiert. Bei der Trocknung der so erhaltenen Polymere wird durch das Verdampfen der Ölphase der Öl-in-Wasser Emulsion eine poröse Struktur der Polymeren erzeugt.

Diesen Verfahren ist gemeinsam, daß die poröse Struktur der wasserabsorbierenden Polymerharze durch Zusatz eines Treibmittels erzielt wird, das während der Trocknung des Polymerharzes verdampft. Bei diesen Verfahren ist jedoch nachteilig, daß die Verdampfung des Treibmittels gemäß einer Zufallsstatistik erfolgt, so daß Porengröße und Porenverteilung der wasserabsorbierenden Polymerharze schwierig einzustellen und zu kontrollieren sind.

In der EP-A-0 105 634 wird ein sulfoniertes, poröses, vernetztes polymeres Material beschrieben, welches Wasser und wäßrige Salzlösungen zu absorbieren vermag. Dieses poröse, vernetzte polymere Material wird durch Polymerisation von wasserunlöslichen Monomeren wie beispielsweise Styrol, Alkyl(meth)acrylate und Divinylbenzol in einer High Internal Phase-Emulsion mit Wasser als interne Phase und einer anschließenden Sulfonierung des erhaltenen porösen Polymers hergestellt.

WO 93/04092, WO 93/04093, WO 93/04115 und WO 94/13704 beschreiben absorbierende Schaummaterialien, die durch Polymerisation von wasserlöslichen, "glasigen" Monomeren wie Styrol und Styrol-Derivate mit wasserunlöslichen, "gummiartigen" Monomeren wie 2-Ethylhexylacrylat und mit wasserunlöslichen Vernetzern wie Divinylbenzol in einer High Internal Phase-Emulsion mit Wasser oder wäßriger CaCl₂-Lösung als interne Phase hergestellt werden. Das Verhältnis zwischen interner und disperser Phase beträgt hierbei 20:1 bis 70:1. Das so nach Trocknung erhaltene Schaummaterial wird durch Waschen mit Tensid-Lösungen hydrophilisiert.

Diesen Verfahren ist gemeinsam, daß die poröse Struktur der wasserabsorbierenden Polymerharze durch Polymerisation von wasserunlöslichen Monomeren in einer High Internal Phase-Emulsion mit Wasser als interne Phase und anschließende Trocknung erhalten werden. Diese Verfahren haben jedoch eine Reihe von Nachteilen. Aufgrund des erforderlichen hohen Verhältnisses zwischen interner und disperser Phase ist die Raumausbeute bei dem Polymerisationsschritt sehr gering. Für die Herstellung einer High Internal Phase-Emulsion müssen relativ große Mengen an Tensid eingesetzt werden, die im porösen wasserabsorbierenden Polymerharz verbleiben und bei Einsatz des Produktes in Hygieneartikeln wie Binden oder Windeln wieder aus dem Produkt extrahiert werden können. Dies ist aufgrund der allgemeinen schleimhautreizenden Wirkung von Tensiden problematisch. Da nach den beschriebenen Verfahren das poröse wasserabsorbierende Polymerharz aus hydrophoben, wasserunlöslichen Monomereinheiten aufgebaut ist, muß sich nach dem Polymerisationsschritt noch ein weiterer Schritt zur Hydrophilierung des Polymerharzes anschließen. Dies ist aus wirtschaftlichen Gründen unvorteilhaft.

Schließlich beschreibt die EP-A-421 264 hydrophile, quellbare Polymerisate, die in Form einer hochporösen, schaumartigen Polyederstruktur vorliegen. Diese hydrophilen, quellbaren Polymerisate werden durch Polymerisation von geeigneten hydrophilen Monomeren in einem wäßrigen Medium, das ein Tensid und die Monomeren enthält, und das durch eine flüssige Kohlenwasserstoffphase stabilisiert ist, hergestellt. Das Polymerisationsmedium enthält hierbei besonders bevorzugt 60 bis 99 Gew.-% Kohlenwasserstoff.

Dieses Verfahren ist allerdings wirtschaftlich unvorteilhaft, da aufgrund des hohen Kohlenwasserstoffgehaltes des Polymerisationsmediums nur eine geringe Raumausbeute bei der Polymerisation erreicht werden kann und große Mengen an Kohlenwasserstoff aus dem Polymerisat herausgetrocknet werden müssen.

Es besteht daher weiter ein Bedarf an einem Verfahren zur Herstellung von porösen, hydrophilen, quellfähigen Polymerisaten, welches die zuvor beschriebenen Nachteile nicht aufweist und einfach durchzuführen ist und welches eine definierte Einstellung der Porengröße und Porenverteilung des Polymerisats erlaubt.

Es wurde nun überraschenderweise gefunden, daß diese Aufgabe durch Gefriertrocknung von gequollenen, nicht-porösen, hydrophilen Polymerisaten, die nach bekannten Verfahren hergestellt werden können, gelöst wird.
Die vorliegende Erfindung betrifft demnach ein Verfahren zur Herstellung poröser hydrophiler, hochquellfähiger Hydrogele, dadurch gekennzeichnet, daß mit Wasser gequollene hydrophile, hochquellfähige Hydrogele gefriergetrocknet werden.

Gefriertrocknung ist die Bezeichnung für das Trocknen eines tiefgefrorenen Materials im Hochvakuum durch Ausfrieren des Lösungsmittels, das dann im gefrorenen Zustand verdampft (Sublimations-Trocknung). Während der Trocknung behält das gefrorene Material seine ursprüngliche Form, so daß nach der Trocknung ein Material mit sehr poröser Struktur erhalten wird.

Das erfindungsgemäße Verfahren kann in allen Gefriertrocknungsapparaturen durchgeführt werden. Diese sind im Handel erhältlich oder sind zumindest dem Fachmann bekannt. Die Gefriertrocknung kann sowohl batchweise als auch kontinuierlich erfolgen.

Die gefrierzutrocknenden Hydrogele werden in gequollenem Zustand eingesetzt. Dies bedeutet, daß sie einen bestimmten Wassergehalt aufweisen. Durch diesen Wassergehalt kann die Porengröße und Porenverteilung der erfindungsgemäß herzustellenden Hydrogele eingestellt werden. Das Gewichtsverhältnis Wasser:Hydrogel liegt bevorzugt bei 2:1 bis 500:1, besonders bevorzugt bei 4:1 bis 200:1 und ganz besonders bevorzugt bei 5:1 bis 100:1.

Die nach dem erfindungsgemäßen Verfahren hergestellten Hydrogele weisen eine spezifische Oberfläche nach BET von bevorzugt 2 bis 15 m²/g, besonders bevorzugt 3 bis 10 m²/g auf.
Das spezifische Porenvolumen dieser Hydrogele beträgt bevorzugt 1,3 x 10⁻² bis 2 x 10⁻¹ cm³/g, besonders bevorzugt 5 x 10⁻² bis 1,5 x 10⁻¹ cm³/g.
Der Quotient aus Porenvolumen und mittlerem Porenradius (dV/dR) wird als Porenradienverteilung bezeichnet - in der Regel eine Gaus*'*sche Verteilungskurve - ausgedrückt als cm³/g x Å (Å steht für Ångström). Die bevorzugte Porenradienverteilung der erfindungsgemäß hergestellten Hydrogele beträgt bevorzugt 1,5 bis 5 cm³/g x Å, besonders bevorzugt 1,8 bis 3 cm³/g x Å.

Geeignete hydrophile, hochquellfähige Hydrogele, die erfindungsgemäß gefriergetrocknet werden können, sind insbesondere Polymere aus (co]polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate. Diese Hydrogele sind dem Fachmann bekannt.
Zur Herstellung dieser hydrophilen, hochquellfähigen Hydrogelen geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich dessen Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide. Desweiteren wasserlösliche N-Vinylamide oder auch Diallyldimethyl-ammoniumchlorid.
Bevorzugte hydrophile Monomere sind Verbindungen der allgemeinen Formel I 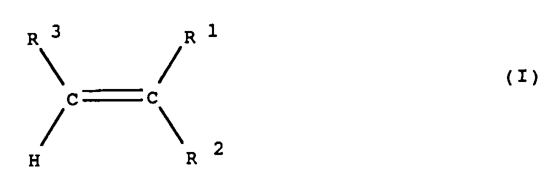 worin
R¹ Wasserstoff, Methyl oder Ethyl,
R² die Gruppe -COOR⁴, die Sulfonylgruppe, die Phosphonylgruppe, die mit (C₁₋C₄)-Alkanol veresterte Phosphonylgruppe oder eine Gruppe der Formel 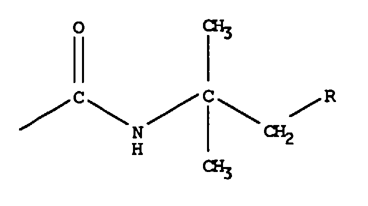
R³ Wasserstoff, Methyl, Ethyl oder die Carboxylgruppe,
R⁴ Wasserstoff, Amino oder Hydroxy-(C₁-C₄)-Alkyl und
R⁵ die Sulfonylgruppe, die Phosphonylgruppe oder die Carboxylgruppe bedeuten.

Beispiele für (C₁-C₄)-Alkanole sind Methanol, Ethanol, n-Propanol oder n-Butanol.

Besonders bevorzugte hydrophile Monomere sind Acrylsäure und Methacrylsäure.

Hydrophile Hydrogele, die durch Polymerisation olefinisch ungesättigter Verbindungen erhalten werden können, sind bereits bekannt und beispielsweise beschrieben in US 4,057,521, US 4,062,817, US 4,525,527, US 4,286,082, US 4,340,706 und US 4,295,987.

Auch hydrophile Hydrogele, die durch Pfropfcopolymerisation olefinisch ungesättigter Säuren auf unterschiedliche Matrices, wie beispielsweise Polysaccharide, Polyalkylenoxide sowie deren Derivate, zugänglich sind, sind bereits bekannt und beispielsweise in der US 5,011,892, US 4,076,663 oder US 4,931,497 beschrieben.
Geeignete Pfropfgrundlagen können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester. Geeignete Polyakylenoxide haben beispielsweise die Formel 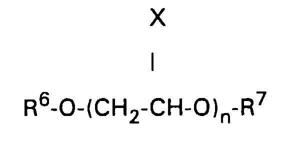 worin
R⁶ und R⁷ unabhängiger voneinander Wasserstoff, Alkyl, Alkenyl oder Acryl,
X Wasserstoff oder Methyl und
n eine ganze Zahl von 1 bis 10 000 bedeuten.
R⁶ und R⁷ bedeuten bevorzugt Wasserstoff, (C₁-C₄)-Alkyl, (C₂-C₆)-Alkenyl oder Phenyl.
Bevorzugte Hydrogele sind insbesondere Polyacrylate, Polymethacrylate sowie die in US 4,931,497, US 5,011,892 und US 5,041,496 beschriebene Pfropfpolymere. Der Inhalt dieser Patentschriften ist ausdrücklich auch Bestandteil vorliegender Offenbarung.

Die hydrophilen, hochquellfähigen Hydrogele sind bevorzugt vernetzt, d. h. sie enthalten Verbindungen mit mindestens zwei Doppelbindungen, die in das Polymernetzwerk einpolymerisiert sind.
Geeignete Vernetzer sind insbesondere Methylenbisacryl- bzw. -methacrylamid, Ester ungesättigter Mono- oder Polycarbonsäuren von Polyolen, wie Diacrylat oder Triacrylat, z. B. Butandiol- oder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in der EP-A 343 427 beschrieben sind. Der Inhalt der EP-A 343427 ist ausdrücklich auch Bestandteil der vorliegenden Offenbarung.

Darüber hinaus sind die hydrophilen, hochquellfähigen Hydrogele besonders bevorzugt in an sich bekannter Weise in wäßriger Gelphase nachvernetzt oder als gemahlene und abgesiebte Polymerpartikel oberflächenvernetzt. Dazu geeignete Vernetzer sind Verbindungen, die mindestens zwei Gruppen enthalten, die mit den Carboxylgruppen des hydrophilen Polymeren kovalente Bindungen bilden können. Geeignete Verbindungen sind beispielsweise Di- oder Polyglycidylverbindungen, wie Phosphonsäurediglycidylester, Alkoxysilylverbindungen, Polyaziridine, Polyamine oder Polyamidoamine, wobei die genannten Verbindungen auch in Mischungen untereinander verwendet werden können (siehe beispielsweise EP-A 83022, EP-A 543303 und EP-A 530438). Als Vernetzer geeignete Polyamidoamine sind insbesondere in der EP-A 349935 beschrieben. Der Inhalt der vorstehend genannten Patentschriften ist ausdrücklich Bestandteil der vorliegenden Offenbarung.

Die hydrophilen, hochquellfähigen Hydrogele können durch an sich bekannte Polymerisationsverfahren hergestellt werden. Bevorzugt ist die Polymerisation in wäßriger Lösung nach dem Verfahren der sogenannten Gelpolymerisation. Dabei werden 15 bis 50 Gew.%ige wäßrige Lösungen eines oder mehrerer hydrophiler Monomerer und gegebenenfalls einer geeigneten Pfropfgrundlage in Gegenwart eines Radikalinitiators bevorzugt ohne mechanische Durchmischung unter Ausnutzung des Trommsdorff-Norrish-Effektes (Bios Final Rep. 363.22; Makromol. Chem. 1, 169 (1947)), polymerisiert.
Die Polymerisationsreaktion kann im Temperaturbereich zwischen 0°C und 150^{°}C, vorzugsweise zwischen 10^{°}C und 100^{°}C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden.
Zur Auslösung der Polymerisation können energiereiche elektromagnetische Strahlen oder die üblichen chemischen Polymerisationsinitiatoren herangezogen werden, z. B. organische Peroxide, wie Benzoylperoxid, tert. Butylhydroperoxid, Methylethyl-ketonperoxid, Cumolhydroperoxid, Azoverbindungen wie Azodiisobutyronitril sowie anorganische Peroxiverbindungen wie (NH₄)₂S₂O₈ oder K₂S₂O₈ oder H₂O₂ gegebenenfalls in Kombination mit Reduktionsmitteln wie Natriumhydrogensulfit, und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie z. B. Mannichaddukte aus Sulfinsäure, Aldehyden und Aminoverbindungen, wie sie in der DE-C 1 301 566 beschrieben sind.
Durch mehrstündiges Nachheizen der Polymerisatgele im Temperaturbereich 50 bis 130^{°}C, vorzugsweise 70 bis 100^{°}C, können die Qualitätseigenschaften der Polymerisate noch verbessert werden.

Wird das gefrierzutrocknende Hydrogel nach dem Verfahren der Gelpolymerisation hergestellt, braucht es nicht in getrockneter Form isoliert zu werden, sondern es kann das gequollene Reaktionsprodukt direkt der Gefriertrocknung zugeführt werden. Der Quellungsgrad des Polymerisats und damit die Porengröße des erfindungsgemäß herzustellenden Produktes kann bei dieser Verfahrensweise durch die Monomerkonzentration in der Polymerisationslösung eingestellt werden.

Natürlich kann aber auch bereits getrocknetes Hydrogel durch Zugabe der gewünschten Menge Wasser gequollen und dann gefriergetrocknet werden.

Erfindungsgemäß hergestellte poröse Polymere können im getrockneten Zustand je nach Anforderung im Einsatzgebiet mechanisch zerkleinert und gegebenenfalls einer Oberflächennachbehandlung, wie beispielsweise in der DE-A-41 38 408 beschrieben, unterworfen werden. Die mit der porösen Struktur verbundenen Vorteile bleiben dabei erhalten.

Für die Gefriertrocknung gemäß der folgenden Beispiele wurde eine handelsübliche Gefriertrocknungsanlage vom Typ LYOVAC GT 2 der Firma LEYBOLD-HERAEUS verwendet, wobei eine Vakuumpumpe mit einem Saugvermögen nach PNEUROP von 7,6 m³/h und einem Endpartialdruck ohne Gasballast von kleiner 2,5 x 10⁻⁴ mbar integriert war.

Das Trocknungsprozedere war in allen Fällen identisch. Das zu gefriertrocknende Gel unterschiedlichen Quellgrades, wozu jeweils eine Anquellzeit von mindestens 48 Stunden gewährt wurde, wurde zuvor in einem Kunststoffbeutel in einer Schicht mit möglichst durchgehend gleicher Schichtdicke zwischen 1 und maximal 5 cm in einer Form, die weitestgehend der Trocknerplatte des Gefriertrockners entsprach, in einem handelsüblichen Gefrierschrank bei Temperaturen zwischen -10 und -20°C eingefroren, in dieser Form aus dem Kunststoffbeutel auf die Trocknerplatten des Gefriertrockners transferiert, bei einer Starttemperatur der Trocknerplatten von -20°C, bei bestmöglichem Vakuum und einer Raumtemperatur zwischen 20 und 25°C als Umgebungstemperatur bis zur Gewichtskonstanz getrocknet, was an einem Endvakuum von ca. 0,15 mbar sowie einem Anstieg der Trocknerplattentemperatur auf Umgebungstemperatur zu erkennen war.

### Beispiel 1

Für die Gefriertrocknung wurde ein Polymergel verwendet, das durch Gelpolymerisation von 850 Teilen Acrylsäure und 42,5 Teilen Tetraallyloxyethan in 3240 Teilen Wasser unter Verwendung von 25 Teilen einer 4 %igen 2,2'-Azobis(2-amidinopropan)dihydrochlorid-Lösung, 11,5 Teilen einer 0,75 %igen Wasserstoffperoxid-Lösung sowie 14,5 Teilen einer 0,15 %igen Ascorbinsäure-Lösung unter Inertisierung mit N₂-Gas bei einer Starttemperatur von 12°C adiabatisch polymerisiert wurde. Das saure Gel wurde mittels eines handelsüblichen, in Fleisch verarbeitenden Betrieben verwendeten Tischfleischwolfs mechanisch zerkleinert, mit 27 %iger Natronlauge (4000 Teile Gel, 1297 Teile NaOH 27 %ig) teilneutralisiert (entspricht einem Neutralisationsgrad der Acrylsäure von 74 Mol.-%) und zur besseren Homogenität weitere zweimal durch den Fleischwolf gefahren. Das so erhaltene Polymergel wurde ohne weitere Verdünnung in oben beschriebener Weise gefriergetrocknet. man erhielt ein erdnußflipartiges Produkt, das deutlich lockerer, also offenporiger war als gleiches Ausgangsmaterial auf übliche Art und Weise ofen-, heißluft- oder walzengetrocknet.

### Beispiel 2

Das gleiche Gel wie in Beispiel 1 beschrieben wurde jetzt mit E-Wasser auf einen Feststoffgehalt von 3 Gewichts-% verdünnt, anquellen lassen und getriergetrocknet. Man erhielt ein flockiges Produkt mit deutlich niederem Schüttgewicht als entsprechend Beispiel 1 gefriergetrocknetes Polymer. Die spezifische Oberfläche nach BET lag bei diesem (Beispiel 2) Produkt bei 5,05 m²/g.
Zum Vergleich, gleiches Ausgangsmaterial, ebenfalls auf 3 % verdünnt, aber jetzt ofengetrocknet, anschließend gemahlen und bei 100/800 µm abgesiebt, ergibt ein Produkt, das eine spezifische Oberfläche nach BET von 0,3 - 0,6 m²/g aufweist.

### Beispiel 3

Unter gleichen Bedingungen wie in Beispiel 1 beschrieben, jedoch unter Verwendung niederer Vernetzerkonzentration wurde ein Polymergel hergestellt, das anschließend zum einen auf einen Feststoffgehalt von 10 Gew.-% (a), zum anderen auf einen Feststoffgehalt von 1 Gew.-% (b) verdünnt wurde. Beide Quellgrade wurde nach entsprechender Anquellzeit gefriergetrocknet. Die beiden erhaltenen Polymerprodukte unterschieden sich entsprechend dem Vorquellgrad in der Porengröße, was deutlich auf REM-Aufnahmen zu erkennen ist: das Produkt (b) mit einem Vorquellgrad von 99 % zeigt deutlich größere Poren als Produkt (a) mit einem Vorquellgrad von 90 %.

### Beispiel 4

Superabsorberhandelsware SANWET® IM 7000 in der Kornverteilung 100-850 µm wurde in unterschiedlichen Mengen E-Wasser anquellen lassen, gefriergetrocknet, mechanisch zerrieben und jeweils die Kornfraktion 100-850 µm zur Bestimmung der spezifischen Oberfläche nach BET sowie des spezifischen Porenvolumens herangezogen. Anquellgrad sowie alle Meßdaten sind der Tabelle 1 zu entnehmen.

**Tabelle 1**

| Beispiel | Quellgrad* des SAP (%) | Spez. Oberfl. nach BET (m²/g) | Spez. Porenvolumen (mm³/g) |
|---|---|---|---|
| 4 a | 80 | 2,61 | 12,6 |
| 4 b | 85 | 2,72 | 19,8 |
| 4 c | 90 | 2,98 | 61,2 |
| 4 d | 95 | 4,31 | 97,4 |
| 4 e | 99 | 7,10 | 134,8 |
| Vergleich IM 7000 | -- | 0,9 | 11,8 |

| | | | |
|---|---|---|---|
| *Quellgrad = Gew.-% Wasser in der Mischung Wasser/SAP vor Trocknung | | | |

## Patentansprüche

1. Verfahren zur Herstellung poröser hydrophiler, hochquellfähiger Hydrogele, dadurch gekennzeichnet, daß mit Wasser gequollene hydrophile, hochquellfähige Hydrogele gefriergetrocknet werden.

2. Verfahren gemäß Anspruch 1, dadurch gekennzeichnet, daß in dem mit Wasser gequollenen hydrophilen, hochquellfähigen Hydrogel das Gewichtsverhältnis Wasser:Hydrogel 2:1 bis 500:1 beträgt.

3. Verfahren gemäß Anspruch 1 und/oder 2, dadurch gekennzeichnet, daß ein poröses hydrophiles, hochquellfähiges Hydrogel mit einer spezifischen Oberfläche nach BET von 2 bis 15 m²/g hergestellt wird.

4. Verfahren gemäß einem oder mehreren der Ansprüche 1 bis 3, dadurch gekennzeichnet, daß ein poröses hydrophiles, hochquellfähiges Hydrogel mit einem spezifischen Porenvolumen von 1,3 x 10⁻² bis 2 x 10⁻¹ cm³/g hergestellt wird.

5. Verfahren gemäß einem oder mehreren der Ansprüche 1 bis 4, dadurch gekennzeichnet, daß ein poröses hydrophiles, hochquellfähiges Hydrogel mit einer Porenradienverteilung von 1,5 bis 5 cm³/g x Å hergestellt wird.

6. Verfahren nach einem oder mehreren der Ansprüche 1 bis 5, dadurch gekennzeichnet, daß hydrophile, hochquellfähige Hydrogele Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate sind.

7. Verfahren nach Anspruch 6, dadurch gekennzeichnet, daß hydrophile Monomere Verbindungen der allgemeinen Formel I 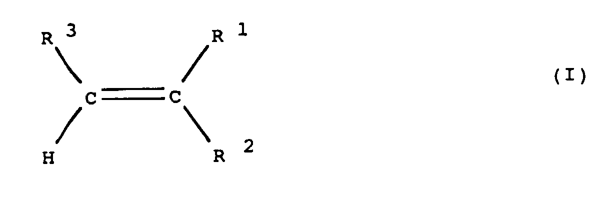 worin
R¹ Wasserstoff, Methyl oder Ethyl,
R² die Gruppe -COOR⁴, die Sulfonylgruppe, die Phosphonylgruppe, die mit (C₁-C₄)-Alkanol veresterte Phosphonylgruppe oder eine Gruppe der Formel 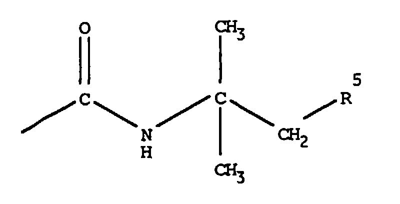
R³ Wasserstoff, Methyl, Ethyl oder die Carboxylgruppe,
R⁴ Wasserstoff, Amino oder Hydroxy-(C₁-C₄)-Alkyl und
R⁵ die Sulfonylgruppe, die Phosphonylgruppe oder die Carboxylgruppe bedeuten, sind.

8. Verfahren nach Anspruch 6 und/oder 7, dadurch gekennzeichnet, daß hydrophile Monomere Acrylsäure oder Methacrylsäure sind.
